Europäisches Patentamt

European Patent Office

Office européen des brevets

(11) Veröffentlichungsnummer: 0 264 937
A2

(12) **EUROPÄISCHE PATENTANMELDUNG**

(21) Anmeldenummer: 87115456.3

(22) Anmeldetag: 21.10.87

(51) Int. Cl.⁴ G02C 5/14

Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 22.10.86 DE 3635891

(43) Veröffentlichungstag der Anmeldung:
27.04.88 Patentblatt 88/17

(84) Benannte Vertragsstaaten:
DE FR GB IT

(71) Anmelder: **Neuhaus, Karl-Hermann**
**Pommern Strasse 15**
**D-4030 Ratingen 1(DE)**

(72) Erfinder: **Neuhaus, Karl-Hermann**
**Pommern Strasse 15**
**D-4030 Ratingen 1(DE)**

(74) Vertreter: **Patentanwälte Dipl.-Ing.**
**Splanemann Dipl.-Chem. Dr. B. Reitzner**
**Tal 13**
**D-8000 München 2(DE)**

(54) **Brillenfassung.**

(57) Die Erfindung betrifft eine Brillenfassung, insbesondere für Sportbrillen, bestehend aus. einem die Gläser aufnehmenden Rahmen (1) und von dem Rahmen (1) trennbaren Bügeln (2, 3). Im Seitenbereich des Rahmens (1) sind dabei zwei Durchbrechungen (4) so angeordnet, daß die Bügel mit ihren rahmenseitigen Enden in den Rahmen (1) steckbar sind. Erfindungsgemäß geschieht das Einführen der Bügel (2, 3) von der Brillenvorderseite her.

EP 0 264 937 A2

Fig .2

## Brillenfassung

Die Erfindung betrifft eine Brillenfassung, insbesondere für Sportbrillen, gemäß dem Oberbegriff von Anspruch 1.

Die US-PS 4 564 272 beschreibt eine randlose Brille, bei der ein Rahmen aus den Augengläsern selbst gebildet wird. Im Seitenbereich des Rahmens befinden sich Bohrungen, durch welche die Enden abnehmbarer Bügel steckbar sind. Zur Befestigung der Bügel wird jenseits des Glases das hindurchgesteckte Bügelende mittels einer Hülse festgesteckt. Alternativ dazu wird auch in der US-PS 4 564 272 vorgeschlagen, das Bügelende mit zwei Stiften zu versehen, die radial aus dem Bügelende herausragen und die zusammen mit dem im Querschnitt kreisförmigen Bügelende durch den Rahmen hindurchsteckbar sind. Die Arretierung des Bügels am Rahmen kann durch Drehung des Bügels um 90° erfolgen. Damit die Bügel in Richtung auf den Rahmen verschwenkbar sind, wird ferner vorgeschlagen, an dem dem Rahmen zugekehrten Bügelende ein flexibles Scharnier vorzusehen. Die beschriebene Brille hat den Nachteil, daß sie bei Torsionsbelastungen, wie sie insbesondere im Sport beim Auftreffen eines Balles auftreten, zu bruchanfällig ist. Insbesondere kann der Rahmen im Bereich der Bohrungen leicht brechen und damit eine immense Verletzungsgefahr für die Augen darstellen.

Die US-PS 4 056 853 beschreibt eine Brillenfassung, die im Seitenbereich des Rahmens - schlitzförmige Langlochbohrungen aufweist, durch welche ein längliches Schaftstück mit einer senkrecht abgewinkelten Lippe 12, die als zur Anlage mit dem Rahmen kommendes Widerlager dient, hindurchsteckbar ist. Dieses Schaftstück besitzt ferner zwei stegförmige Erhebungen zur Arretierung des jeweiligen Augenglases. Das Schaftstück dient jedoch lediglich zur schnellen Auswechselung und Befestigung der Augengläser.

Es ist Aufgabe der vorliegenden Erfindung, eine Brillenfassung, insbesondere für Sportbrillen, zu schaffen, die einfach aufgebaut ist, durch den Aufbau bruchsicher ist und mit der sich die Bügel leicht am Rahmen in eine platzsparende Stellung anlegen lassen.

Diese Aufgabe wird erfindungsgemäß durch Anspruch 1 gelöst.

Die erfindungsgemäße Brillenfassung zeichnet sich in erster Linie dadurch aus, daß sie ohne ein herkömmliches Metallscharnier zur Befestigung der Bügel am Rahmen auskommt. Ausgehend von dem zusammengelegten Zustand kann die Brille in einfacher Handhabung dadurch aufsetzbar gestaltet werden, daß die ohrseitigen Bügelenden in die vorgesehenen Durchbrechungen am Mittelteil eingeführt und der Bügel über seine gesamte Länge bis zum anderen Ende hindurchgeführt wird, wo schließlich die Verdickung an den die Bohrung bzw. den Schlitz umrandenden Flächen zur Anlage kommt oder einrastet.

Vorteilhafte Weiterbildungen ergeben sich aus den Unteransprüchen.

Besonders leicht handhabbar wird diese Brille, wenn die ohrseitigen Bügelenden mit einem flexiblen ein-oder zweiteiligen Tragband verbunden oder verbindbar sind. In diesem Fall zieht der Benutzer nur kurz das Tragband von dem Rahmen weg, wodurch die Bügelenden in die im Rahmen vorgesehene Durchbrechung hineingleiten und bei weiterer Bewegung des flexiblen Tragbandes vom dem Rahmen weg die Bügel über deren gesamte Länge durch die Durchbrechungen hindurchgeführt werden, bis sie schließlich mit den verdickten Enden am Rahmen zur Anlage kommen.

Vorzugsweise sind die Bügel im wesentlichen starr.

Die Verdickung am rahmenseitigen Bügelende kann verschiedenartig geformt sein, da es lediglich darauf ankommt, daß das betreffende Bügelende nicht durch die Durchbrechung des Rahmens, die als Bohrung oder als Schlitz ausgebildet sein kann, hindurchgleitet. Als in der Herstellung kostengünstig erweisen sich kugelförmige oder im Querschnitt länglich-ovale Verdickungen mit einer größeren Breite als der übrige Bügel und die - schlitzförmige Durchbrechung.

Nach einer weiteren Ausführungsform der Erfindung weist jede der Durchbrechungen innerhalb des Rahmens eine aus einem härteren Material als der Rahmen bestehende ringförmige oder länglich-ovale Verstärkung auf, die zwar ein möglichst reibungsarmes Hindurchgleiten des Bügels ermöglicht, aber als stabiles Widerlager verhindert, daß die Verdickung des Bügelendes bei starkem Zug, der ein geringfügiges Aufweiten der Durchbrechung zur Folge hat, ebenfalls durch die Durchbrechung hindurchgleitet.

Bevorzugt wird im Rahmen die den Augen zugewandte Seite der Durchbrechung konisch aufgeweitet, wodurch Vorsorge getroffen wird, daß die Brillenbügel im aufgeklappten Zustand sich der Kopfbreite entsprechend einstellen lassen.

Um einen Bruch bzw. eine Rißbildung des Rahmens im Bereich der Durchbrechung zu verhindern, soll dieser Bereich eine auf die zu erwartenden Zugbelastungen ausgelegte geringfügige Elastizität aufweisen.

Für Sportbrillen empfiehlt sich ein zweiteiliges Tragband, wobei die Tragbandteile ein oder mehrere Befestigungsmittel zur gegenseitigen Verbindbarkeit aufweisen. Als Befestigungsmittel können Druckknopf-, Clips-oder Adhäsionsverschlüsse dienen, die in geeigneter Verteilung auf den Tragbandteilen eine variable Verstellung der im Gebrauch genutzten Tragbandlänge ermöglichen. Das Tragband hat in einer bevorzugten Ausführungsform eine Länge, die ein Umhängen der Brille um den Hals ermöglicht. Zum Aufsetzen und Befestigen der Brille am Kopf wird ein in der entsprechend benötigten Tragbandlänge angeordneter Verschluß befestigt. Im einfachsten Fall läßt sich das Tragband auch durch Verknoten beliebig verkürzen.

Nach einer weiteren Ausgestaltung der Erfindung sind die Augengläser austauschbar, um Gläser verschiedener Tönung und/oder Glasstärke einsetzen zu können. Hierzu ist der Rahmen im Bereich der nutenförmigen Ausnehmungen für die Augengläser begrenzt elastisch ausgestaltet, so daß durch stärkeren Druck die Gläser aus der Fassung springen und gegebenenfalls durch andere Augengläser ersetzt werden können. Diese Ausgestaltung dient zudem zur Vermeidung von Verletzungsgefahren, wie sie häufig auftreten, wenn bei einem heftigen Schlag oder Stoß auf die Brille infolge der Starrheit des Systems Fassung-Brillengläser ansonsten Schnittverletzungen drohen.

Sind der Rahmen als auch der Bügel transparent, so besitzt die Brillenfassung zudem den Vorteil, daß das Sichtfeld nicht durch Scharniere oder andere lichtundurchlässige Teile eingeschränkt wird.

Weitere Einzelheiten, Merkmale und Vorteile sind in nachfolgender Beschreibung mehrerer Ausführungsbeispiele der Erfindung anhand der Zeichnungen näher erläutert.

Es zeigen:

Fig. 1 eine Frontansicht des Rahmens;

Fig. 2 eine Seitenansicht des Rahmens mit durchsteckbarem Bügel;

Fig. 3 die Draufsicht eines Ausführungsbeispiels einer erfindungsgemäßen Sportbrille mit einem an dem ohrseitigen Bügelende befestigten Gummiband;

Fig. 4 eine Querschnittansicht des Seitenbereichs des Rahmens;

Fig. 5 eine weitere Ausführungsform eines erfindungsgemäßen Rahmens mit eingesteckten Bügeln;

Fig. 6 eine Seitenansicht einer weiteren Ausführungsform des erfindungsgemäßen Bügels; und

Fig. 7 eine Draufsicht einer weiteren Ausführungsform einer erfindungsgemäßen Sportbrille.

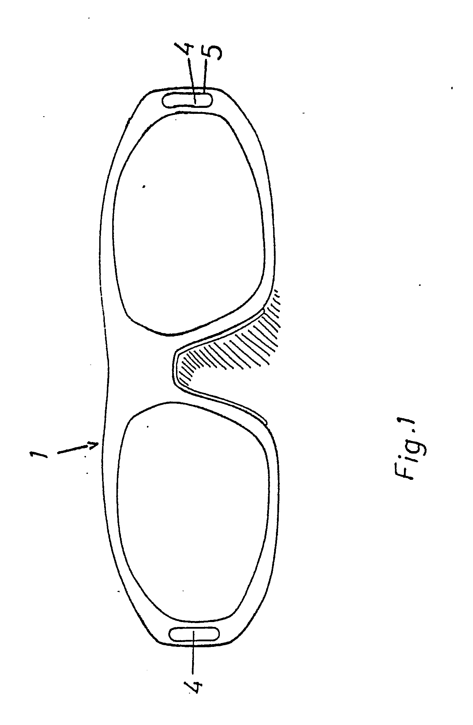

Der in Fig. 1 dargestellte Rahmen 1 hat die bei nach dem Stand der Technik bekannten Brillenfassungen übliche Form und besteht aus zwei die Augengläser der gewünschten Formgestaltung angepaßten Teilen, die durch einen Mittelsteg miteinander verbunden sind. In den Seitenbereichen dieser Fassung sind jeweils als Langlochbohrungen (Schlitze) ausgebildete Durchbrechungen 4 vorgesehen.

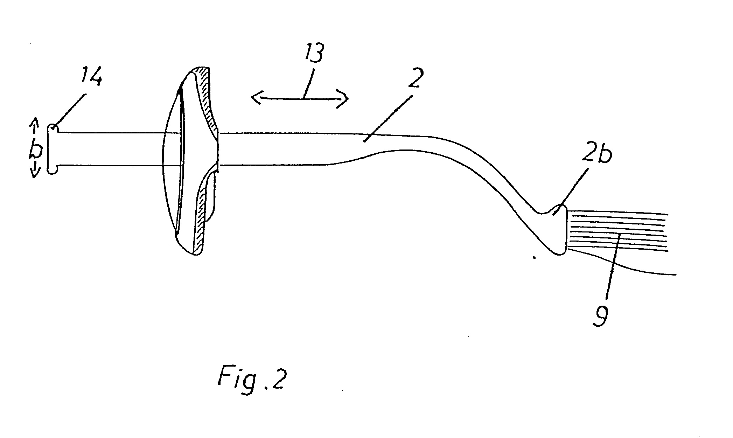

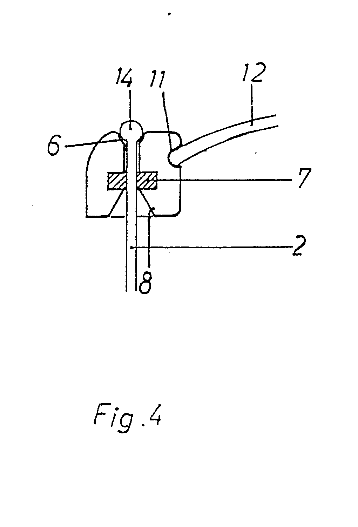

Wie in Fig. 2 dargestellt, können durch diese Durchbrechungen oder Schlitze entlang der durch den Doppelpfeil 13 dargestellten Bewegungsrichtungen die Bügel senkrecht zum Rahmen hindurchgeführt werden, bis die Verdickung 14 an den die Durchbrechung 4 umgebenden Randflächen zur Anlage kommt. Im vorliegenden Fall wird ein - schaftartiger, im Querschnitt länglich runder Bügel verwendet, an dessen Ende sich eine in ihrer Formgebung dem Bügel angepaßte Verdickung 14 mit einer Höhe b anschließt. Verwendet man Bügel, deren Querschnitte im wesentlichen kreisförmig sind, bietet es sich, wie in Fig. 4 angedeutet, an, die Verdickung kugelförmig zu gestalten.

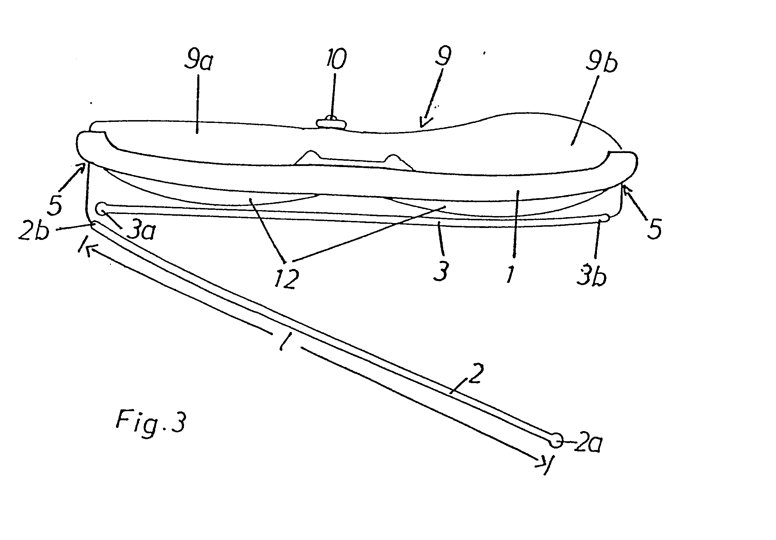

Wie in Fig. 2 und 3 angedeutet, sind die ohrseitigen Bügelenden 2b bzw. 3b mit einem ein- oder zweiteiligen flexiblen Tragband, zum Beispiel aus Gummi, verbunden.

Fig. 3 zeigt ein Ausführungsbeispiel der Erfindung in zusammengelegten Zustand. Die Bügel 2 und 3 liegen an der Frontseite des Rahmens 1 an bzw. sind dort anlegbar, wobei das Gummiband durch die Durchbrechung 4 an beiden Enden durchgeführt ist. Das dargestellte Tragband 9 besteht aus zwei Teilen 9a und 9b, welche über eine Druckknopfbefestigung 10 miteinander verbunden sind.

Aus der in Fig. 4 dargestellten Querschnittsansicht ist die Anordnung der Verstärkung 7 ersichtlich, welche sich inmitten des Rahmens befindet. Die Verstärkung 7 besteht im einfachsten Fall aus einem kreisförmigen Ring mit einem Innendurchmesser, der dem des verwendeten, im Querschnitt geringfügig kleineren Bügels entspricht. An der Frontseite des Rahmens 1 sind die Durchbrechungen nutenförmig ausgestaltet; die nutenförmige Ausnehmung 6 ist der hier kugelförmigen Verdickung 14 des Bügels 2 angepaßt. Jenseits des Verstärkungsrings in Richtung auf die Rahmenrückseite besitzt die Durchbrechung eine konische Aufweitung 8. Das Augenglas 12 ruht in nutenförmigen Ausnehmungen mit begrenzt elastischen Anlageflächen 1, die ein Herausnehmen der Augengläser bei der Ausübung eines stärkeren Drucks auf die Gläser 12 und deren Austausch ermöglichen.

Alternativ dazu ist es auch möglich, die nutenförmige Ausnehmung 6 unmittelbar vor der Verstärkung 7 vorzusehen, so daß die Verdickung 14 die dadurch gegebene Engstelle an der Frontseite des Rahmens zu überwinden hat, bevor die Verdickung in der nutenförmigen Ausnehmung 6 einrastet.

Das Aufklappen der Brille, ausgehend von der in Fig. 3 dargestellten Lage der Bügel, kann in einfacher Weise dadurch geschehen, daß an dem Tragband 9 in von dem Rahmen 1 wegführender Richtung gezogen wird, so daß die rahmenseitigen Brillenenden 2b und 3b in die Durchbrechungen 4 gleiten und die Bügel entlang ihrer Länge 1 hindurchgeführt werden, bis die Verdickungen 2a, 2b an den die Durchbrechungen 4 umrandenden Flächen 5 zur Anlage kommen bzw. ggf. in den nutenförmigen Ausnehmungen 6 einrasten.

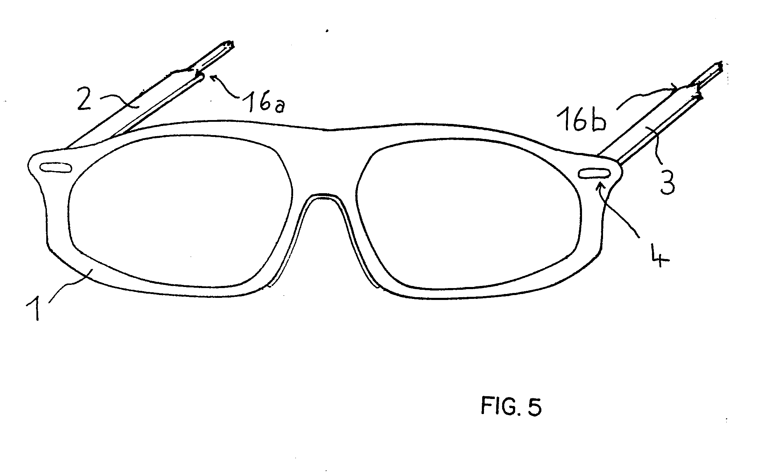

Bei der weiteren Ausführungsform der Erfindung gemäß Fig. 5, die sowohl für eine Sportbrille als auch für eine Modebrille geeignet ist, sind die Durchbrechungen 4 als Schlitze ausgebildet, die sich im wesentlichen horizontal erstrecken. Dementsprechend weisen die Bügel 2 und 3 einen vertikal flachen Querschnitt mit im wesentlichen horizontaler Längserstreckungsrichtung auf. Dies gilt zumindest für den rahmenseitigen Bereich der Bügel 2 und 3. Um bei dieser Ausführungsform ein vertikales Kippen des Rahmens 1 zu verhindern, ist die Lagerung der Bügel 2 und 3 in den Durchbrechungen 4 an deren Ober-und Unterseite ziemlich spielarm, und die Führung in der Durchbrechung 4 ist vergleichsweise tief. Dies kommt auch der Stabilität zugute.

Die Bügel 2 und 3 verjüngen sich ohrseitig zu dem an sich bekannten Rundquerschnitt, wobei der Durchmesser des Rundquerschnitts etwa der Dicke der Bügel 2 und 3 im Bereich des flachen Querschnitts entspricht.

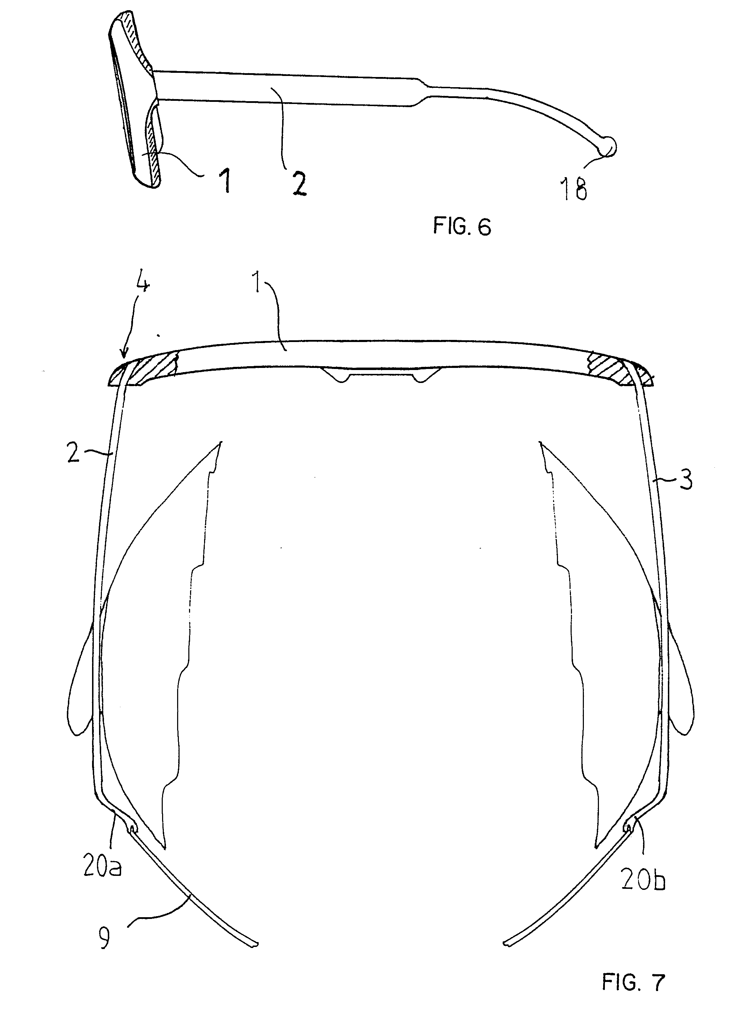

In Fig. 5 sind die Bügel 2 und 3 abgebrochen dargestellt, wobei ihre ohrseitigen Enden entweder in den in Fig. 6 dargestellten kugelförmigen Verdickungen oder in den in Fig. 2 und 3 dargestellten Tragband 9 auslaufen können.

Neben ästhetischen Gesichtspunkten liegt der besondere Vorteil dieser Ausführungsform darin, daß die Bügel 2 und 3 zum Zusammenlegen der Brille flach vor die Gläser gelegt werden können, ohne daß die ohrseitigen Enden der Bügel die Durchbrechungen 4 vollständig verlassen müssen. Hierdurch wird ein besonders leichtes Wiedereinschnappen der Bügel durch Ziehen an dem Tragband möglich, wobei der Übergangsbereich 16a und 16b zwischen dem flachen und dem runden Teil der Bügel 2 und 3 zweckmäßig so geformt ist, daß automatisch eine Drehung um 90° in der richtigen Richtung und damit eine Einführung des flachen Bereichs in die Durchbrechung 4 eingeleitet wird. Da der Bügel in dieser Ausführungsform zudem aus einem gegenüber der zuvor beschriebenen Ausführungsform vergleichsweise weichen Material besteht und keine scharfen Kanten aufweist, dienen die Bügel 2 und 3 zugleich als Schutz für die Brillengläser im zusammengelegten Zustand der Brille.

Alternativ können die Durchbrechungen ganz oben oder ganz unten angeordnet sein, so daß die Bügel nicht an den Brillengläsern anliegen, sondern an deren Rändern.

In der in Fig. 6 dargestellten Ausführungsform sind kugelförmige Verdickungen 18 an den ohrseitigen Enden der Bügel vorgesehen. Diese weisen einen Durchmesser auf, der größer als die lichte Weite der Durchbrechungen 4 ist, so daß die Bügel nicht ganz aus den Durchbrechungen 4 herausgenommen werden können, sondern aufgrund des runden Querschnitts des ohrseitigen Bereichs der Bügel 2 und 3 in den Durchbrechungen 4 gedreht werden können. Hierbei ist eine an sich bekannte spiralige Ausbildung des ohrseitigen Bereichs der Bügel 2 und 3 möglich, wobei auch die das Ohr um nahezu 180° umgreifende Ausbildung der Bügelenden möglich ist.

Bei der in Fig. 7 dargestellten Ausführungsform weisen die Durchbrechungen 4 eine im wesentlichen vertikale Längserstreckungsrichtung auf, verlaufen jedoch nach vorne schräg etwa zur Nasenspitze hin. In dieser Ausführungsform weisen sowohl der Rahmen 1 als auch die Bügel 2 und 3 eine ganz leichte Durchbiegung auf, die sowohl ästhetisch als auch funktionell günstig ist und die Brille besser an die Kopfform anpaßt. Besonders günstig ist hier, wenn die Durchbiegung der Bügel 2 und 3 genau derjenigen des Rahmens 1 entspricht. Dann liegen die Bügel 2 und 3 im zusammengelegten Zustand über ihre ganze Länge an dem Rahmen 1 an, denn die hinteren Enden der Bügel 2 und 3 laufen in Abkröpfungen 20a und 20b aus, die in ihrem Winkel so ausgelegt sind, daß ein flaches Anlegen der Bügel 2 und 3 an die Brillenvorderseite möglich ist. Die Abkröpfungen 20a und 20b sind in einem Bereich vorgesehen, der hinter dem Ohr zu liegen kommt, so daß sie keine Druckstellen erzeugen können. Vorzugsweise sind sie mit dem Tragband 9 miteinander verbunden.

## Ansprüche

1. Brillenfassung, insbesondere für Sportbrillen, bestehend aus einem die Gläser aufnehmenden Rahmen (1) und von dem Rahmen (1) trennbaren Bügeln (2, 3), deren rahmenseitige Enden je durch eine im Seitenbereich des Rahmens (1) vorgesehene Durchbrechung (4) steckbar sind, dadurch

**gekennzeichnet,** daß die Bügel (2, 3) von der Brillenvorderseite in die Durchbrechungen (4) einführbar sind.

2. Brillenfassung nach Anspruch 1, dadurch gekennzeichnet, daß die rahmenseitigen Enden (2a, 3a) je mindestens einen Anschlag, insbesondere in Form einer Verdickung, aufweisen, der an entsprechend geformten, die Durchbrechung (4) umrandenden und von den Augen abgewandten Flächen (5) des Rahmens (1) lose anliegt, und daß jeder Bügel (2, 3) im übrigen über seine gesamte Länge (1) durch die Durchbrechung (4) hindurchführbar ist.

3. Brillenfassung nach Anspruch 1, dadurch gekennzeichnet, daß die rahmenseitigen Enden (2a, 3a) je mindestens einen Anschlag, insbesondere in Form einer Verdickung, aufweisen, der in nutenförmigen Ausnehmungen (6) an der Durchbrechung (4) einrastbar ist, und daß jeder Bügel (2, 3) im übrigen über seine gesamte Länge (1) durch die Durchbrechung (4) hindurchführbar ist.

4. Brillenfassung nach einem der Ansprüche 1 bis 3, dadurch gekennzeichnet, daß die Verdickungen (2a, 3a) kugelförmig oder im Querschnitt länglich-oval mit einer größeren Höhe (b) als der übrige Bügel (2, 6) und die Durchbrechung (4) sind.

5. Brillenfassung nach einem der Ansprüche 1 bis 4, dadurch gekennzeichnet, daß die Durchbrechung (4) innerhalb des Rahmens (1) eine aus härterem Material als der Rahmen (1) bestehende ringförmige oder länglich-ovale Verstärkung (7) aufweist, die ein Hindurchgleiten der Verdickung (2a, 3a) des Bügelendes bei Aufweiten der Bohrung bzw. des Schlitzes (4) verhindert.

6. Brillenfassung nach einem der Ansprüche 1 bis 5, dadurch gekennzeichnet, daß die den Augen zugewandte Seite der Durchbrechung (4) konisch aufgeweitet (8) ist und/oder daß der Rahmen (1) im Bereich der Durchbrechung (4) eine geringfügige Elastizität aufweist.

7. Brillenfassung nach einem der Ansprüche 1 bis 6, dadurch gekennzeichnet, daß die ohrseitigen Bügelenden (2b, 3b) mit einem flexiblen ein-oder zweiteiligen Tragband (9; 9a, 9b) verbunden, z.B. vergossen, oder verbindbar sind, wobei im Falle eines zweiteiligen Tragbandes (9; 9a, 9b) die Tragbandteile Befestigungsmittel wie Druckknopf-, Clips-oder Adhäsionsverschlüsse (10) zur gegenseitigen Verbindbarkeit aufweisen.

8. Brillenfassung nach einem der Ansprüche 1 bis 7, dadurch gekennzeichnet, daß der Rahmen (1) nutenförmige Ausnehmungen mit begrenzt elastischen Anlageflächen (11) zur Aufnahme der Augengläser besitzt und die Bügel (2, 3) im wesentlichen starr sind.

9. Brillenfassung nach einem der Ansprüche 1 bis 8, dadurch gekennzeichnet, daß der Rahmen und/oder die Bügel transparent sind.

10. Brillenfassung nach einem der Ansprüche 1 bis 7, dadurch gekennzeichnet, daß die Bügel (2, 3) in horizontaler Richtung so elastisch oder ggf. so plastisch verformbar ausgebildet sind, daß sie im in dem Rahmen (1) eingesteckten Zustand mit ihren ohrseitigen Enden zu diesem schwenkbar sind.

11. Brillenfassung nach Anspruch 10, dadurch gekennzeichnet, daß an den Bügeln (2, 3) insbesondere schnappende Haltevorrichtungen für die Befestigung an dem Rahmen (1) in der an dem Rahmen anliegenden Position vorgesehen sind.

12. Brillenfassung nach einem der vorhergehenden Ansprüche, dadurch gekennzeichnet, daß die Bügel (2, 3) in rahmenseitigen Bereichen einen flachen Querschnitt und in ohrseitigen Bereichen einen runden Querschnitt aufweisen und im Bereich des runden Querschnitts nicht dicker als die Durchbrechung (4) sind und daß an den ohrseitigen Enden Verdickungen (18) vorgesehen sind.

13. Brillenfassung nach einem der vorhergehenden Ansprüche, dadurch gekennzeichnet, daß die länglichen Durchbrechungen (4) eine im wesentlichen horizontale Längserstreckungsrichtung aufweisen und die Bügel (2, 3) einen Querschnitt mit horizontaler Längserstreckungsrichtung aufweisen und daß die Bügel in der nicht arretierten Position in der Durchbrechung (4) steckend vertikal geführt sind und horizontal schwenkbar sind.

14. Brillenfassung nach einem der vorhergehenden Ansprüche, dadurch gekennzeichnet, daß die horizontale Erstreckung der Durchbrechungen (4) größer als die horizontale Breite der Bügel (2, 3) ist und die Bügel (2, 3) mindestens in einem ohrnahen, in aufgesetztem Zustand der Brille an dem Ohr nicht anliegenden Bereich für eine Schwenkbeweglichkeit des Bügels (2, 3) um etwa 90° in die an dem Rahmen anliegende Position, in welcher der Bügel (2, 3) sich mit diesem ohrnahen Bereich durch die Durchbrechung erstreckt, ausgebildet ist.

Fig.1

Fig.2

0 264 937

Fig. 3

Fig. 4

FIG. 5

0 264 937

FIG. 6

FIG. 7

# PATENTANWÄLTE

## DIPL.-ING. R. SPLANEMANN    DIPL.-CHEM. DR. B. REITZNER

ZUGEL. VERTRETER BEIM EPA · PROFESSIONAL REPRESENTATIVES BEFORE EPO · MANDATAIRES AGRÉÉS PRÈS L'OEB

EPA EPO-OEB
DG 1
Reçu:
2 4 -11- 1987
05    ANL ZEICHN.

Europäisches Patentamt

Erhardtstraße 27

8000 München 2

8000 MUNCHEN 2    13. Nov. 1987
Tal 13
Telefon: (089) 22 62 07 / 22 62 09
Telefax: (089) 29 76 92 (Gr. 2 + 3)
Telex: 528 418 intus d

Unsere Akte:    3534-X-13.812

Ihr Zeichen:    87 115 456.3

Karl-Hermann Neuhaus

Zu der am 21. Oktober 1987 eingereichten Patentanmeldung
wird der Prioritätsbeleg der deutschen Patentanmeldung
P 36 35 891.6 vom 22. Okt. 1986 nachgereicht.

Ferner wird gebeten, in den Anmeldungsunterlagen vom 21. Okt. 1987
folgenden Verbesserungen vorzunehmen:

Seite 2, Zeile 5:   "12" ist zu streichen.
Seite 3, Zeile 4:   "vom" ist zu ersetzen durch "von"

Patentanwalt

Prioritätsbeleg

X/Rf

BAD ORIGINAI

Konten: Deutsche Bank AG, München, Konto-Nr. 2014 009 · Postgiro: München 600 60-807